# EUROPEAN PATENT APPLICATION

(11) **EP 4 586 350 A1**
(43) Date of publication of application: **16.07.2025**
(21) Application number: 24787039.7
(22) Date of filing: 03.01.2024
(51) Int. Cl.: H01M 10/04

(54) **STACKING MACHINE**

(30) Priority: 27.11.2023 CN 202323244640 U
(71) Applicant: Wuxi Lead Intelligent Equipment Co., Ltd., Wuxi, Jiangsu 214028 (CN)
(72) Inventor: YANG, Tao, Wuxi, Jiangsu (CN); ZHU, Wenda, Wuxi, Jiangsu (CN); GENG, Mingpeng, Wuxi, Jiangsu (CN)
(74) Representative: Rau, Schneck & Hübner Patentanwälte Rechtsanwälte PartGmbB
(86) International application number: PCT/CN2024/070395
(87) International publication number: WO 2025/112171

(57) **Abstract**

The present disclosure relates to a stacking machine, comprising a stacking table, a material-unloading mechanism, a stacking mechanism, a deviation correction table and a conveying mechanism. The deviation correction table can move between the stacking table and the conveying mechanism. In the process of transferring the pole piece to the stacking table, the material-unloading mechanism obtains the pole piece on the conveying mechanism and moves toward the deviation correction table, the deviation correction table moves toward the conveying mechanism, and when the material-unloading mechanism is moved above the deviation correction table, the pole piece may be placed on the deviation correction table. Next, the material-unloading mechanism returns to its position, and the deviation correction table moves toward the stacking table while performing deviation correction on the pole piece. At the same time, the stacking mechanism moves toward the deviation correction table, and when the stacking mechanism moves above the deviation correction table, the pole piece on the deviation correction table may be obtained. The stacking mechanism places the obtained pole piece on the stacking table, then the deviation correction table moves toward the conveying mechanism to prepare for the transfer of the next pole piece. It can be seen that the routes of the material-unloading mechanism and the stacking mechanism may be significantly shortened, so that the stacking pace of the pole piece may be significantly accelerated, thereby improving the production efficiency of the cell. (FIG. 1)

## Description

### TECHNICAL FIELD

The present disclosure relates to the technical field of lithium battery devices, and in particular to a stacking machine.

### BACKGROUND

Stacking is a common process for preparing lithium battery cells. A battery cell is formed by alternately stacking on a stacking table a positive pole piece and a negative pole piece and placing a diaphragm therebetween. The pole piece may be deviated in position during the feeding process, so the pole piece generally needs to be placed on the deviation correction table by the material-unloading mechanical arm for deviation correction, and then placed on the stacking table by the stacking mechanical arm after the deviation correction is completed. Moreover, due to the long routes of the mechanical arm, the production efficiency of the cell is low.

### SUMMARY

Based on the above, it is necessary to provide a stacking machine capable of enhancing the production efficiency of a cell in response to the above problem.

A stacking machine, comprising a stacking table, a material-unloading mechanism, a stacking mechanism, an deviation correction table and a conveying mechanism, the deviation correction table being configured for carrying a pole piece and performing a deviation correction operation on the pole piece, the conveying mechanism being configured for conveying the pole piece, the deviation correction table is capable of moving between the stacking table and the conveying mechanism; the material-unloading mechanism is capable of obtaining a pole piece on the conveying mechanism and placing the pole piece on the deviation correction table; the stacking mechanism is capable of obtaining the pole piece on the deviation correction table and placing the pole piece on the stacking table.

In one of embodiments, the pole piece comprises a positive pole piece and a negative pole piece, there are provided two conveying mechanisms which convey the positive pole piece and the negative pole piece respectively, the two conveying mechanisms are respectively positioned at two sides of the stacking table, and there are each provided two material-unloading mechanisms, two stacking mechanisms and two deviation correction tables, which respectively match with the two conveying mechanisms.

In one of embodiments, further comprising a diaphragm tension control device for conveying a diaphragm material strip to the stacking table, the diaphragm tension control device being capable of causing the diaphragm material strip to swing reciprocally in a first direction, so as to lay the diaphragm material strip in a Z-shape on the stacking table and position it between two adjacent pole pieces.

In one of embodiments, the diaphragm tension control device comprises a tension maintaining mechanism, the tension maintaining mechanism comprises a first tension roller, a second tension roller and a driving assembly; and the diaphragm material strip going through the diaphragm tension control device is capable of passing between the first tension roller and the second tension roller;

wherein the diaphragm material strip may be supported by the first tension roller and the second tension roller during reciprocating swing in the first direction, the driving assembly is capable of providing for the first tension roller and the second tension roller a supporting force that acts on the diaphragm material strip, and the supporting force provided by the driving assembly can be adjusted so as to tension the diaphragm material strip and maintain a preset tension.

In one of embodiments, the tension maintaining mechanism further comprises a mounting bracket, a first swing arm and a second swing arm, each of the first swing arm and the second swing arm has one end thereof rotatably mounted on the mounting bracket, and the other end thereof is mounted thereon with respectively the first tension roller and the second tension roller, and the driving assembly transmits the supporting force to the first tension roller and the second tension roller respectively through the first swing arm and the second swing arm.

In one of embodiments, the driving assembly comprises a first driver and a second driver respectively connected to the first swing arm and the second swing arm, and provide the supporting force for the first tension roller and the second tension roller respectively.

In one of embodiments, the diaphragm tension control device further comprises a swing roller mechanism which is provided downstream of the tension maintaining mechanism, the diaphragm material strip output by the tension maintaining mechanism is capable of going through the swing roller mechanism, and the swing roller mechanism is capable of reciprocating in the first direction and causing the diaphragm material strip to swing reciprocally in the first direction.

In one of embodiments, the diaphragm tension control device further comprises a tension sensor capable of detecting a tension of the diaphragm material strip going through the tension maintaining mechanism.

In one of embodiments, the diaphragm tension control device further comprises a buffering mechanism located on an upstream side of the tension maintaining mechanism, and the buffering mechanism is capable of buffering or releasing the diaphragm material strip.

In one of embodiments, the diaphragm tension control device further comprises an unwinding mechanism and a tensioning mechanism, the tensioning mechanism is located between the unwinding mechanism and the buffering mechanism, the unwinding mechanism is capable of unwinding the diaphragm material strip, and the tensioning mechanism is capable of tensioning the diaphragm material strip between the unwinding mechanism and the buffering mechanism.

In one of embodiments, the tensioning mechanism comprises a base, a swing rod and a tensioning roller, one end of the swing rod is rotatably mounted on the base, the tensioning roller is mounted at one end of the swing rod distal to the base, and the diaphragm material strip is capable of winding through the tensioning roller.

In one of embodiments, the diaphragm tension control device further comprises a tension isolation mechanism located between the buffering mechanism and the tensioning mechanism, the diaphragm material strip passes by the tension isolation mechanism, and the tension isolation mechanism is capable of isolating the tension of the diaphragm material strip between the buffering mechanism and the tensioning mechanism.

In one of embodiments, the tension isolation mechanism comprises a main drive roller and a pressure roller, the diaphragm material strip is capable of passing through and being clamped between the main drive roller and the pressure roller, and the main drive roller is capable of providing a driving force to convey the diaphragm material strip to the buffering mechanism.

In the process of transferring the pole piece conveyed by the conveying mechanism to the stacking table for stacking by the stacking machine, the material-unloading mechanism obtains the pole piece on the conveying mechanism and moves toward the deviation correction table, the deviation correction table moves toward the conveying mechanism, and when the material-unloading mechanism is moved above the deviation correction table, the pole piece may be placed on the deviation correction table. Next, the material-unloading mechanism returns to its position, and the deviation correction table moves toward the stacking table while performing deviation correction on the pole piece. At the same time, the stacking mechanism moves toward the deviation correction table, and when the stacking mechanism moves above the deviation correction table, the pole piece on the deviation correction table may be obtained. The stacking mechanism places the obtained pole piece on the stacking table, then the deviation correction table moves toward the conveying mechanism to prepare for the transfer of the next pole piece. It can be seen that the routes of the material-unloading mechanism and the stacking mechanism may be significantly shortened, so that the stacking pace of the pole piece may be significantly accelerated, thereby improving the production efficiency of the cell.

### BRIEF DESCRIPTION OF THE DRAWINGS

In order to clearly illustrate embodiments of the present disclosure or technical solutions in the prior art, accompanying drawings that need to be used in description of the embodiments or the prior art will be briefly introduced as follows. Obviously, drawings in following description are only the embodiments of the present disclosure. For those skilled in the art, other drawings may also be obtained according to the disclosed drawings without creative efforts.
FIG. 1 is a structural schematic diagram of a stacking machine in a preferred embodiment of the present disclosure;
FIG. 2 is a structural schematic diagram of a diaphragm tension control device in the stacking machine shown in FIG. 1;
FIG. 3 is a structural schematic diagram of a tension maintaining mechanism in the diaphragm tension control device shown in FIG. 2;
FIG.4 is a top view of the tension maintaining mechanism shown in FIG.3.

### DETAILED DESCRIPTION

In order to make the above objects, features and advantages of the present disclosure more clearly understood, specific embodiments of the present disclosure will be described in detail below with reference to the accompanying drawings. In a following description, numerous specific details are set forth in order to provide a thorough understanding of the present disclosure. However, the present disclosure may be implemented in many other ways different from those described here, and those skilled in the art may make similar improvements without violating a connotation of the present disclosure. Therefore, the present disclosure is not limited by the specific embodiments disclosed below.

In the description of the present disclosure, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for convenience of describing the present disclosure and simplifying the description, rather than indicating or implying that a device or element referred to must be provided with a particular orientation, be constructed and operate in a particular orientation, and therefore should not be understood as a limitation to the present disclosure.

In addition, terms "first" and "second" are only used for descriptive purposes and should not be understood as indicating or implying relative importance or implying a number of indicated technical features. Therefore, a feature delimited with "first", "second" may expressly or implicitly comprise at least one of those features. In a description of the present disclosure, "a plurality" means at least two, such as two, three, etc., unless expressly and specifically defined otherwise.

In the present disclosure, unless expressly specified and limited otherwise, terms "mounted", "communicated", "connected", "fixed" and other terms should be interpreted in a broad sense, for example, it may be a fixed connection, a detachable connection, or an integrated; it may be a mechanical connection or an electrical connection; it may be directly connected, or indirectly connected through an intermediate medium, and it may be an internal communication between two elements or an interaction relationship between the two elements, unless otherwise explicitly defined. For those of ordinary skill in the art, specific meanings of the above terms in the present disclosure may be understood according to specific situations.

In the present disclosure, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is higher than the second feature in a horizontal direction. The first feature being "below", "under" and "below" the second feature may mean that the first feature is directly below or obliquely below the second feature, or simply means that the first feature is smaller than the second feature in a horizontal direction.

It should be noted that when an element is referred to as being "fixed to" or "arranged on" another element, it may be directly on another element, or there may be an intervening element therebetween. When an element is referred to as being "connected" to another element, it may be directly connected to another element or intervening elements may also be present. Terms "vertical", "horizontal", "upper", "lower", "left", "right" and similar expressions used here are only for illustration purposes rather than indicating the only implementation.

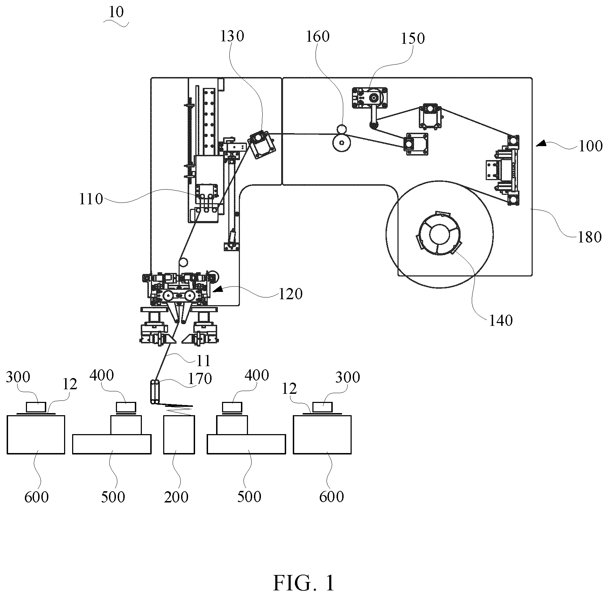

Please refer to FIG. 1, a stacking machine 10 of a preferred embodiment of the present disclosure comprises a stacking table 200, a material-unloading mechanism 300, a stacking mechanism 400, an deviation correction table 500, and a conveying mechanism 600.

The conveying mechanism 600 is used for conveying a pole piece 12. The pole piece 12 may be a single pole piece, or a composite pole piece composed of a plurality of single pole pieces and diaphragms. Specifically, in the present embodiment, the pole piece 12 is a single pole piece, and comprises both a positive pole piece and a negative pole piece.

The deviation correction table 500 is used for carrying the pole piece 12 and perform deviation correction on it. Specifically, the deviation correction table 500 may cause the carried pole piece 12 to translate and rotate, so as to adjust the position and angle of the pole piece 12. The deviation correction table 500 usually further comprises a deviation correction camera (not shown in the figure), which is used for acquiring image information of the pole piece 12 to determine if there is any deviation in the pole piece 12.

The material-unloading mechanism 300 may obtain the pole piece 12 from the conveying mechanism 600 and place it on the deviation correction table 500. After the deviation correction table 500 completes the deviation correction on the pole piece 12, the stacking mechanism 400 may obtain the pole piece 12 from the deviation correction table 500 and place it on the stacking table 200. The stacking table 200 is used for carrying the diaphragm and the pole piece 12, and after the required number of layers of the pole piece 12 is stacked on the stacking table 200, the cell may be obtained.

Furthermore, the deviation correction table 500 may move between the stacking table 200 and the conveying mechanism 600. Specifically, a guide rail may be provided between the conveying mechanism 600 and the stacking table 200, and the deviation correction table 500 is mounted on the above guide rail and may slide reciprocally along it, such that the deviation correction table 500 may move reciprocally between the stacking table 200 and the conveying mechanism 600.

When the material-unloading mechanism 30 transfers the pole piece 12 from the conveying mechanism 600 to the deviation correction table 500, the deviation correction table 500 moves toward the conveying mechanism 600, and the material-unloading mechanism 300 moves toward the deviation correction table 500 after obtaining the pole piece 12 from the conveying mechanism 600; when the material-unloading mechanism 300 moves above the deviation correction table 500, the pole piece 12 may be placed on the deviation correction table 500. After the material-unloading mechanism 300 puts down the pole piece 12, it returns to its position and prepares to obtain the next pole piece 12. It can be seen that in the process of transferring the pole piece 12 to the deviation correction table 500, since the deviation correction table 500 and the material-unloading mechanism 300 move toward each other, the route of the material-unloading mechanism 300 may be shortened.

After the pole piece 12 is transferred to the deviation correction table 500, the deviation correction table 500 performs deviation correction on the pole piece 12. At the same time, the deviation correction table 200 will change direction and move toward the stacking table 200, and the stacking mechanism 400 will move toward the deviation correction table 200 at the same time. When the stacking mechanism 400 moves above the deviation correction table 500, it may obtain the deviation-corrected pole piece 12 from the deviation correction table 500. After the stacking mechanism 400 obtains the pole piece 12, it moves toward the stacking table 200 and places the pole piece 12 on the stacking table 200. The deviation correction table 500 then will change the direction again and move toward the conveying mechanism 600 to prepare for the next pole piece 12. It can be seen that in the process of transferring the pole piece 12 to the stacking table 200, since the deviation correction table 500 and the stacking mechanism 400 move toward each other, the route of the stacking mechanism 400 may also be shortened.

By repeating this cycle, as the deviation correction table 500 moves reciprocally between the conveying mechanism 600 and the stacking table 200, a plurality of pole pieces 12 are sequentially transferred to the stacking table 200 to be stacked, thereby finishing manufacturing of the cell. Moreover, since the routes of the material-unloading mechanism 300 and the stacking mechanism 400 during the stacking process may be significantly shortened, the paces of the material-unloading mechanism 300 and the stacking mechanism 400 may be significantly accelerated, thereby improving the production efficiency of the cell.

In the present embodiment, there are provided two conveying mechanisms 600, conveying the positive pole piece and the negative pole piece respectively, and being located on both sides of the stacking table 200. There are each provided two material-unloading mechanisms 300, two stacking mechanisms 400, and two deviation correction tables 500, that respectively match with the two conveying mechanisms 600.

Taking FIG. 1 as an example, the two conveying mechanisms 600 are located respectively on the left and right sides of the stacking table 200. A left conveying mechanism 600 is used for conveying positive pole pieces, and a right conveying mechanism 600 is used for conveying negative pole pieces. The material-unloading mechanism 300 matching with the left conveying mechanism 600 may first transfer the positive pole piece to a left deviation correction table 500, and then a left stacking mechanism 400 transfers the positive pole piece from the deviation correction table 500 to the stacking table 200. The material-unloading mechanism 300 matching with the right conveying mechanism 600 may first transfer the negative pole piece to a right deviation correction table 500, and then the right stacking mechanism 400 transfers the negative pole piece from the deviation correction table 500 to the stacking table 200.

The two stacking structures 400 alternately place the pole pieces 20 on the stacking table 200. In this way, the positive pole pieces and the negative pole pieces may be stacked alternately on the stacking table 200 to obtain the cell. Moreover, since the positive pole piece and the negative pole piece are conveyed and transferred independently of each other, which are completed respectively by different mechanisms, it is possible to effectively prevent the positive pole piece from being confused with the negative pole piece.

It should be noted that in other embodiments, only one set of the material-unloading mechanisms 300, the stacking mechanisms 400, the deviation correction tables 500, and the conveying mechanisms 600 may be set to convey and transfer the positive pole piece and the negative pole piece. At this time, the positive pole pieces and the negative pole pieces may be arranged alternately in advance on the conveying mechanism 600, and the conveying mechanism 600 may convey the positive pole pieces and the negative pole pieces alternately to a position that may be obtained by the material-unloading mechanism 300, and thus place them alternately on the stacking table 200.

The positive pole pieces and the negative pole pieces on the stacking table 200 are stacked alternately, and the two adjacent pole pieces 12 are separated by a diaphragm. In addition, in the present embodiment, the stacking machine 100 further comprises a diaphragm tension control device 100 for conveying the diaphragm material strip 11 to the stacking table 200. The diaphragm tension control device 100 may cause the diaphragm material strip 11 to swing reciprocally in the first direction, so as to lay the diaphragm material strip 11 in a Z-shape on the stacking table 200 and position it between adjacent two pole pieces 12.

While laying the diaphragm material strip 11 in the Z-shape, the stacking mechanism 400 may place the positive pole piece and the negative pole piece alternately on the stacking table 200, and each time one pole piece 12 is placed, the diaphragm material is folded once, thus separating the adjacent pole pieces 12 with the diaphragm; repeating the above operation until the stacked pole pieces 12 reach a required number of layers to complete the preparation of the cell, and the diaphragm material strip 11 laid on the stacking table 200 is folded into a "Z" shape.

Providing the diaphragm by folding it in the Z-shape, the processing efficiency may be improved. It should be noted that in other embodiments, the diaphragm may also be cut into diaphragm pieces, and each time a pole piece 12 is placed, a layer of diaphragm pieces is placed on it, which may also separate the adjacent two pole pieces 12 with the diaphragm.

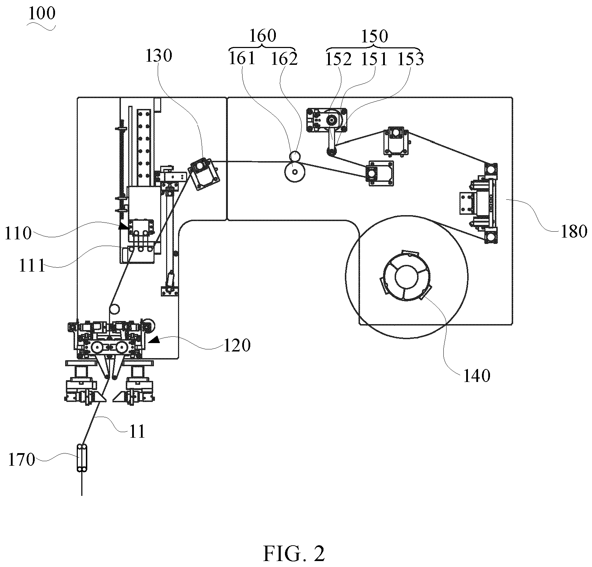

Please also refer to FIG. 2, in the present embodiment, the diaphragm tension control device 100 comprises a buffering mechanism 110 and a tension maintaining mechanism 120.

The diaphragm material strip 11 used for stacking may go through the buffering mechanism 110 and the tension maintaining mechanism 120 in sequence. Wherein, the buffering mechanism 110 may buffer or release the diaphragm material strip 11. The buffering mechanism 110 generally comprises a plurality of buffering rollers 111, and the relative positions of the plurality of buffering rollers 111 may be changed. The diaphragm material strips 11 going through the buffering mechanism 110 may sequentially pass by the plurality of buffering rollers 111. Further, the plurality of buffering rollers 111, by changing their relative positions, may achieve buffering or releasing of the diaphragm material strip 11.

When there is redundancy or shortage in the diaphragm material strip 11, the buffering mechanism 110 may buffer the redundant diaphragm material strip 11 or release it to compensate for the shortage. In this way, it is possible to prevent the diaphragm material strip 11 from being loosened or broken. Obviously, in other embodiments, if the fluctuation of the diaphragm material strip 11 during actual operation is small, the buffering mechanism 110 may also be omitted.

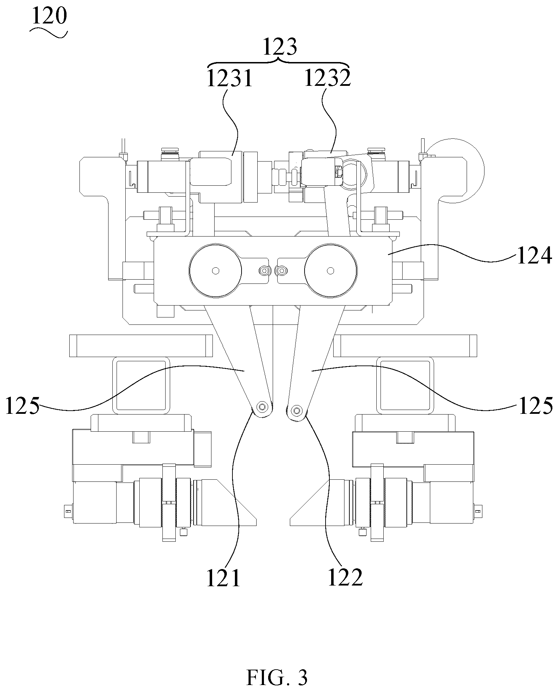

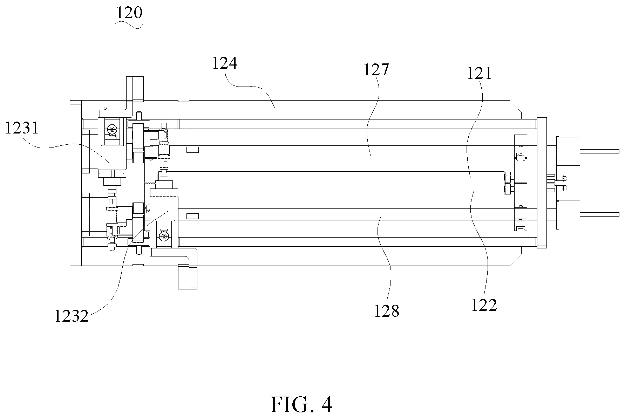

Please also refer to FIGS. 3 and 4, the tension maintaining mechanism 120 comprises a first tension roller 121, a second tension roller 122, and a driving assembly 123. Wherein, the diaphragm material strip 11 going through the tension maintaining mechanism 120 may pass between the first tension roller 121 and the second tension roller 122.

During the stacking process, the diaphragm material strip 11 is output by the tension maintaining mechanism 120 and laid on the stacking table 200 in the Z-shape. At this time, the diaphragm material strip 11 swings reciprocally in the first direction relative to the stacking table 200, and swings reciprocally between the first tension roller 121 and the second tension roller 122. Moreover, during the swing of the diaphragm material strip 11 in the first direction, it can be supported by the first tension roller 121 and the second tension roller 122, thereby tensioning the diaphragm material strip 11.

In the present embodiment, the diaphragm tension control device 100 further comprises a swing roller mechanism 170, which is provided downstream of the tension maintaining mechanism 120. The diaphragm material strip 11 output by the tension maintaining mechanism 120 may go through the swing roller mechanism 170, which may move reciprocally in the first direction and cause the diaphragm material strip 11 to swing reciprocally in the first direction.

Specifically, the swing roller mechanism 170 generally comprises two oppositely arranged pinch rollers, through which the diaphragm material strip 11 output by the tension maintaining mechanism 120 passes. As the swing roller mechanism 170 moves reciprocally in the first direction, it causes the diaphragm material strip 11 to swing reciprocally and achieve the Z-shape fold.

Furthermore, the driving assembly 123 may provide a supporting force for the first tension roller 121 and the second tension roller 122 acting on the diaphragm material strip 11, and the supporting force provided by the driving assembly 123 can be adjusted so as to tension the diaphragm material strip 11 and maintain a preset tension. When the diaphragm material strip 11 swings toward the first tension roller 121, the first tension roller 121 may abut against and tension the diaphragm material strip 11; when the diaphragm material strip 11 swings toward the second tension roller 122, the second tension roller 122 may abut against and tension the diaphragm material strip 11.

Taking FIG. 2 as an example, the first direction refers to the left-right direction. The first tension roller 121 is on the left, the second tension roller 122 is on the right, and the diaphragm material strip 11 swings left and right during the stacking process. When the diaphragm material strip 11 swings to the left, the first tension roller 121 may abut against and tension the diaphragm material strip 11; when the diaphragm material strip 11 swings to the right, the second tension roller 122 may abut against and tension the diaphragm material strip 11. Moreover, the first tension roller 121 and the second tension roller 122 may be moved under the drive of the driving assembly 123, thereby adjusting the tension degree of the diaphragm material strip 11. Therefore, by controlling the supporting force of the first tension roller 121 and the second tension roller 122 in real time, the preset tension may be maintained by controlling the tension degree of the diaphragm material strip 11.

More specifically, when the diaphragm material strip 11 swings to the left and is tensioned by the first tension roller 121, if the tension of the diaphragm material strip 11 is detected to be greater than the preset tension, the driving assembly 123 may reduce the supporting force of the first tension roller 121 acting on the diaphragm material strip 11, thereby reducing the tension degree of the diaphragm material strip 11 such that the tension of diaphragm material strip11 decreases and approaches the preset tension; if the tension of the diaphragm material strip 11 is detected to be less than the preset tension, the driving assembly 123 may increase the supporting force of the first tension roller 121 acting on the diaphragm material strip 11, thereby increasing the tension of the diaphragm material strip 11, such that the tension of diaphragm material strip11 increases and approaches the preset tension.

Similarly, when the diaphragm material strip 11 swings to the right and is tensioned by the second tension roller 122, if the tension of the diaphragm material strip 11 is detected to be greater than the preset tension, the driving assembly 123 may reduce the supporting force of the second tension roller 122 acting on the diaphragm material strip 11, thereby reducing the tension degree of the diaphragm material strip 11; if the tension of the diaphragm material strip 11 is detected to be less than the preset tension, the driving assembly 123 may increase the supporting force of the second tension roller 122 acting on the diaphragm material strip 11, thereby increasing the tension degree of the diaphragm material strip 11.

Specifically, in the present embodiment, the diaphragm tension control device 100 further comprises a tension sensor 130, which may detect the tension of the diaphragm material strip 11 going through the buffering mechanism 110 and the tension maintaining mechanism 120. The tension sensor 130 may monitor the tension of the diaphragm material strip 11 in real time, facilitating the driving assembly 123 to dynamically adjust the supporting force of the first tension roller 121 and the second tension roller 122 according to the real-time tension, so as to precisely control the tension of the diaphragm material strip 11.

Moreover, when there is redundancy or shortage in the diaphragm material strip 11 during the swinging process, the buffering mechanism 110 may buffer the redundant diaphragm material strip 11 or release it to compensate for the shortage, thus avoiding the diaphragm material strip 11 from being loosened or broken. It can be seen that with the cooperation of the buffering mechanism 110 and the tension maintaining mechanism 120, the tension of the diaphragm material strip 11 may be stably maintained during the stacking process, thus avoiding wrinkles, shrinkage, and other issues of the diaphragm material strip 11, which helps to improve the quality of the cell.

In the present embodiment, the tension maintaining mechanism 120 further comprises a mounting bracket 124, a first swing arm 125, and a second swing arm 126. One end of the first swing arm 125 and one end of the second swing arm 126 are rotatably mounted on the mounting bracket 124, and the other ends thereof are respectively mounted with the first tension roller 121 and the second tension roller 122. The driving assembly 123 transmits supporting force respectively to the first tension roller 121 and the second tension roller 122 through the first swing arm 125 and the second swing arm 126.

Specifically, the mounting bracket 124 is provided with a first pivot shaft 127 and a second pivot shaft 128 that are parallel to each other, and the first swing arm 125 and the second swing arm 126 are respectively mounted on the first pivot shaft 127 and the second pivot shaft 128. The first pivot shaft 127 and the second pivot shaft 128 may rotate around their own axes, thus enabling the first swing arm 125 and the second swing arm 126 to swing.

In this way, the positions of the first tension roller 121 and the second tension roller 122 may also be changed under the action of the diaphragm material strip 11. For example, when the tension of the diaphragm material strip 11 suddenly increases, the reaction force of the diaphragm material strip 11 acting on the first tension roller 121 and the second tension roller 122 will be greater than the supporting force, causing the first tension roller 121 and the second tension roller 122 to retreat, thereby playing a buffering role and preventing the diaphragm material strip 11 from being broken. Moreover, the first tension roller 121 and the second tension roller 122, during their retreating, may cause the first swing arm 125 and the second swing arm 126 to swing, the moving trajectories of the first tension roller 121 and the second tension roller 122 being arc-shaped, which may also reduce the friction between the first tension roller 121 and the second tension roller 122, and the diaphragm material strip 11.

Specifically, in the present embodiment, the first tension roller 121 and the second tension roller 122 are rotatably mounted respectively on the first swing arm 125 and the second swing arm 126, and are capable of rotating around their own axes. In this way, the first tension roller 121 and the second tension roller 122, when abutting against the diaphragm material strip 11, may roll along the surface of the diaphragm material strip 11, thereby avoiding scratches on the diaphragm material strip 11.

Furthermore, in the present embodiment, the driving assembly 123 comprises the first driver 1231 and the second driver 1232, which are respectively connected to the first swing arm 125 and the second swing arm 126, and provide supporting force for the first tension roller 121 and the second tension roller 122.

Since the first driver 1231 and the second driver 1232 may provide supporting force for the first tension roller 121 and the second tension roller 122 respectively, the supporting force of the first tension roller 121 and the second tension roller 122 acting on the diaphragm material strip 11 may be controlled and adjusted separately, thereby improving the precision of controlling the tension of the diaphragm material strip 11.

Specifically, both the first driver 1231 and the second driver 1232 may be cylinders and are controlled in real-time by an electrical proportional valve. An electrical control signal may be generated according to the real-time tension of the diaphragm material strip 11, and the electrical proportional valve may control the gas intake quantity and gas exhaust quantity of the cylinders according to the electrical control signal, thereby adjusting the supporting force provided by the first driver 1231 and the second driver 1232 to the first tension roller 121 and the second tension roller 122 in real time to ensure that the diaphragm material strip 11 maintains the preset tension.

It should be noted that, in other embodiments, the first driver 1231 and the second driver 1232 may also be springs, which generate the supporting forces provided to the first tension roller 121 and the second tension roller 122 by pre-compression. Moreover, by controlling the pre-compression of the springs in real time, the supporting force of the first tension roller 121 and the second tension roller 122 may be adjusted.

Please refer to FIG. 2 again, in the present embodiment, the diaphragm tension control device 100 further comprises an unwinding mechanism 140 and a tensioning mechanism 150, with the tensioning mechanism 150 located between the unwinding mechanism 140 and the buffering mechanism 110. Wherein, the unwinding mechanism 140 may unwind the diaphragm material strip 11, and the tensioning mechanism 150 may tension the diaphragm material strip 11 between the unwinding mechanism 140 and the buffering mechanism 110.

The unwinding mechanism 140 may comprise a tensioning shaft, and the material roll of the diaphragm material strip 11 may be pre-clamped on the tensioning shaft. The tensioning mechanism 150 may maintain a certain tension of the diaphragm material strip 11 unwound from the unwinding mechanism 140, so as to ensure that the unwinding process goes smoothly.

Furthermore, in the present embodiment, the tensioning mechanism 150 comprises a base 151, a swing rod 152, and a tensioning roller 153. One end of the swing rod 152 is rotatably mounted on the base 151, the tensioning roller 153 is mounted on the end of the swing rod 152 away from the base 151, and the diaphragm material strip 11 is capable of winding through the tensioning roller 153.

The swing rod 152 may be connected to elements such as a cylinder or a spring, thereby applying a pre-tension force to the tensioning roller 153, so as to enable the tensioning roller 153 to tension the diaphragm material strip 11.

In the present embodiment, the diaphragm tension control device 100 further comprises a tension isolation mechanism 160 located between the buffering mechanism 110 and the tensioning mechanism 150. The diaphragm material strip 11 goes through the tension isolation mechanism 160, which may isolate the tension of the diaphragm material strip 11 between the buffering mechanism 110 and the tensioning mechanism 150.

That is to say, the tensions of the tension isolation mechanism 160 on both sides of the diaphragm material strip 11 may be different, and the tension isolation mechanism 160 may isolate the unwinding tension, preventing the tension fluctuations in the unwinding process from being transmitted to the buffering mechanism 110 and the tension maintaining mechanism 120. In this way, it is possible to prevent the tension fluctuations in the unwinding process from interfering with the diaphragm material strip 11 in the stacking process, thereby further improving the stability of the tension of the diaphragm material strip 11 in the stacking process.

Specifically, in the present embodiment, the tension isolation mechanism 160 comprises a main drive roller 161 and a pressure roller 162. The diaphragm material strip 11 may pass through and be clamped between the main drive roller 161 and the pressure roller 162. The main drive roller 161 is capable of providing driving force to convey the diaphragm material strip 11 to the buffering mechanism 110.

Under the clamping of the main drive roller 161 and the pressure roller 162, the two sides of the diaphragm material strip 11 can be effectively separated, thereby isolating the unwinding tension. Moreover, under the drive of the main drive roller 161, the diaphragm material strip 11 may be smoothly conveyed to the buffering mechanism 110, thereby continuously supplying the diaphragm material strip 11 for the stacking process.

In addition, the diaphragm tension control device 100 generally also comprises a large plate 180. Components such as the buffering mechanism 110, the tension maintaining mechanism 120, the tension sensor 130, the unwinding mechanism 140, the tensioning mechanism 150, and the tension isolation mechanism 160 may all be mounted on the large plate 180.

In the process of transferring the pole piece 12 conveyed by the conveying mechanism 600 to the stacking table 200 for stacking by the above stacking machine 10, the material-unloading mechanism 300 obtains the pole piece on the conveying mechanism 600 and moves toward the deviation correction table 500, the deviation correction table 500 moves toward the conveying mechanism 600, and when the material-unloading mechanism 300 is moved above the deviation correction table 500, the pole piece 12 may be placed on the deviation correction table 500. Next, the material-unloading mechanism 300 returns to its position, then the deviation correction table 500 moves toward the stacking table 200 while performing deviation-correction on the pole piece 12. At the same time, the stacking mechanism 400 moves toward the deviation correction table 500, and when the stacking mechanism 400 moves above the deviation correction table 500, the pole piece 12 on the deviation correction table 500 may be obtained. The stacking mechanism 400 places the obtained pole piece on the stacking table 200, then the deviation correction table 500 moves toward the conveying mechanism 600 to prepare for the transfer of the next pole piece 12. It can be seen that the routes of the material-unloading mechanism 300 and the stacking mechanism 400 may be significantly shortened, so that the stacking pace of the pole piece 12 may be significantly accelerated, thereby improving the production efficiency of the cell.

The technical features of the above embodiments may be combined arbitrarily. For the sake of brevity, not all possible combinations of the individual technical features of the above embodiments are described. However, a combination of these technical features shall be considered to be within the scope of the present specification, as long as there is no contradiction in the combination.

The above embodiments are merely expressions of a few implementations of the present disclosure described in a specific and detailed manner, and are not to be construed as limitation to the scope of the present disclosure. It is to be noted that for a person of ordinary skill in the art, various modifications and improvements could be made without departing from the principle of the present disclosure, and shall fall into the protection scope of the present disclosure. Therefore, the protection scope of the present disclosure shall be subject to the appended claims.

## Claims

1. A stacking machine, comprising a stacking table, a material-unloading mechanism, a stacking mechanism, an deviation correction table and a conveying mechanism, the deviation correction table being configured for carrying a pole piece and performing deviation correction on the pole piece, the conveying mechanism being configured for conveying the pole piece, wherein the deviation correction table is capable of moving between the stacking table and the conveying mechanism; the material-unloading mechanism is capable of obtaining a pole piece on the conveying mechanism and placing the pole piece on the deviation correction table; and the stacking mechanism is capable of obtaining the pole piece on the deviation correction table and placing the pole piece on the stacking table.

2. The stacking machine according to claim 1, **characterized in that** the pole piece comprises a positive pole piece and a negative pole piece, there are provided two conveying mechanisms which convey the positive pole piece and the negative pole piece respectively, the two conveying mechanisms are respectively positioned at two sides of the stacking table, and
there are each provided two material-unloading mechanisms, two stacking mechanisms and two deviation correction tables, which respectively match with the two conveying mechanisms.

3. The stacking machine according to claim 1, **characterized by** further comprising a diaphragm tension control device for conveying a diaphragm material strip to the stacking table, the diaphragm tension control device being capable of causing the diaphragm material strip to swing reciprocally in a first direction, so as to lay the diaphragm material strip in a Z-shape on the stacking table and position it between two adjacent pole pieces.

4. The stacking machine according to claim 3, **characterized in that** the diaphragm tension control device comprises a tension maintaining mechanism, the tension maintaining mechanism comprises a first tension roller, a second tension roller and a driving assembly; and the diaphragm material strip going through the diaphragm tension control device is capable of passing between the first tension roller and the second tension roller;
wherein the diaphragm material strip can be supported by the first tension roller and the second tension roller during reciprocating swing in the first direction, the driving assembly is capable of providing a supporting force for the first tension roller and the second tension roller that acts on the diaphragm material strip, and the supporting force provided by the driving assembly can be adjusted so as to tension the diaphragm material strip and maintain a preset tension.

5. The stacking machine according to claim 4, **characterized in that** the tension maintaining mechanism further comprises a mounting bracket, a first swing arm and a second swing arm, each of the first swing arm and the second swing arm has one end thereof rotatably mounted on the mounting bracket, and the other end thereof is mounted thereon with respectively the first tension roller and the second tension roller, and the driving assembly transmits the supporting force to the first tension roller and the second tension roller respectively through the first swing arm and the second swing arm.

6. The stacking machine according to claim 5, **characterized in that** the driving assembly comprises a first driver and a second driver respectively connected to the first swing arm and the second swing arm, and provide the supporting force for the first tension roller and the second tension roller respectively.

7. The stacking machine according to claim 4, **characterized in that** the diaphragm tension control device further comprises a swing roller mechanism which is provided downstream of the tension maintaining mechanism, the diaphragm material strip output by the tension maintaining mechanism is capable of going through the swing roller mechanism, and the swing roller mechanism is capable of reciprocating in the first direction and causing the diaphragm material strip to swing reciprocally in the first direction.

8. The stacking machine according to claim 4, **characterized in that** the diaphragm tension control device further comprises a tension sensor capable of detecting a tension of the diaphragm material strip going through the tension maintaining mechanism.

9. The stacking machine according to any one of claims 4 to 8, **characterized in that** the diaphragm tension control device further comprises a buffering mechanism located on an upstream side of the tension maintaining mechanism, and the buffering mechanism is capable of buffering or releasing the diaphragm material strip.

10. The stacking machine according to claim 9, **characterized in that** the diaphragm tension control device further comprises an unwinding mechanism and a tensioning mechanism, the tensioning mechanism is located between the unwinding mechanism and the buffering mechanism, the unwinding mechanism is capable of unwinding the diaphragm material strip, and the tensioning mechanism is capable of tensioning the diaphragm material strip between the unwinding mechanism and the buffering mechanism.

11. The stacking machine according to claim 10, **characterized in that** the tensioning mechanism comprises a base, a swing rod and a tensioning roller, one end of the swing rod is rotatably mounted on the base, the tensioning roller is mounted at one end of the swing rod distal to the base, and the diaphragm material strip is capable of winding through the tensioning roller.

12. The stacking machine according to claim 10, **characterized in that** the diaphragm tension control device further comprises a tension isolation mechanism located between the buffering mechanism and the tensioning mechanism, the diaphragm material strip passes by the tension isolation mechanism, and the tension isolation mechanism is capable of isolating the tension of the diaphragm material strip between the buffering mechanism and the tensioning mechanism.

13. The stacking machine according to claim 12, **characterized in that** the tension isolation mechanism comprises a main drive roller and a pressure roller, the diaphragm material strip is capable of passing through and being clamped between the main drive roller and the pressure roller, and the main drive roller is capable of providing a driving force to convey the diaphragm material strip to the buffering mechanism.
